# EUROPÄISCHE PATENTSCHRIFT

(11) **EP 1 439 367 B1**
(45) Veröffentlichungstag und Bekanntmachung des Hinweises auf die Patenterteilung: **26.07.2006**
(21) Anmeldenummer: 03290137.3
(22) Anmeldetag: 20.01.2003
(51) Int. Cl.: F28F 9/04, B60H 1/00

(54) **Wärmeübertrager mit dem Sammelrohr verbundenem Anschlussflansch**
Heat exchanger comprising a connector joined to the header
Echangeur de chaleur comprenant un connecteur relié au tube collecteur

(43) Veröffentlichungstag der Anmeldung: 21.07.2004
(73) Patentinhaber: Behr France Hambach S.A.R.L., 57910 Hambach (FR)
(72) Erfinder: Kaczmarek, Fabrice, 67700 Saverne (FR); Jung Patrick, F-57910 Roth (FR); Seibert-Sandt Frédéric, F-57000 Metz (FR)
(74) Vertreter: Grauel, Andreas

(56) Entgegenhaltungen:
- EP-A- 1 150 088
- US-A- 5 163 716
- US-A- 5 363 910

## Beschreibung

Die Erfindung betrifft einen Wärmeübertrager, insbesondere einen Kondensator für Klimaanlagen von Kraftfahrzeugen, nach dem Oberbegriff des Patentanspruches 1, wie er in US 5 363 910 offenbart ist.

Kondensatoren für Klimaanlagen ― wie z. B. durch die EP-A 915 308 bekannt - werden von einem Kältemittel durchströmt, welches über einen Kältemittelanschlussflansch in den Kondensator eintritt und über einen weiteren Kältemittelflansch wieder aus dem Kondensator austritt: Die Anschlussflansche weisen einen durchgehenden Kältemittelkanal auf, der einerseits mit einem Sammelrohr des Kondensators und andererseits mit einer Kältemitteleingangs- oder -ausgangsleitung verbunden ist. Der gesamte Kondensator, im Wesentlichen bestehend aus einem Rohr/Rippenblock, den Sammelrohren und den Anschlussflanschen wird in einem Lötofen "in einem Schuss" gelötet. Dazu ist es erforderlich, die Anschlussflansche für den Lötprozess mit den Sammelrohren zu fixieren. Bisher erfolgte dies durch zusätzliche Teile oder Lötvorrichtungen, was den Fertigungsablauf verzögert hat.

Ein zweiteiliger Anschlussflansch zur Befestigung einer Kältemittelleitung an einem Kondensator wurde durch die US-A 5,163,716 bekannt. Der Kondensator weist einen Sammelkasten mit einer ebenen Anschlussfläche auf, auf die ein quaderförmiger Verbindungsblock aufgesetzt und mit dem Sammelkasten verlötet ist. Eine Kältemittelleitung ist mit einem Adapterstück verschweißt, welches mit dem Verbindungsblock verschraubt wird. Die Kältemittelverbindung von der Kältemittelleitung erfolgt über den Adapter und einen Kältemittelkanal im Verbindungsblock. Dieser Kältemittelanschluss weist eine Vielzahl von Teilen und Montageschritten auf und ist daher mit relativ hohen Herstellungskosten belastet.

Durch die EP-A 1 167 897 wurde ein gelöteter Flachrohrkondensator mit zwei Sammelrohren und einem Sammler bekannt, welcher parallel zu einem der Sammelrohre angeordnet ist und mit diesem Sammelrohr über einen Verbindungsblock mit zwei Verbindungskanälen kältemittelseitig verbunden ist. Über diesen Verbindungsblock, der mit dem Sammelrohr des Kondensators verlötet ist, strömt Kältemittel aus dem Kondensator in den Sammler und aus dem Sammler wieder zurück in den Kondensator. Der Verbindungsblock weist in Verlängerung der Kältemittelverbindungskanäle jeweils Stutzen auf, die in Öffnungen des Sammelrohres eingesetzt und mit diesen durch Heftschweißen oder Presssitz fixiert werden. Anschließend erfolgt eine Verlötung der Teile. Der Sammelbehälter wird anschließend an den Lötprozess mit dem Verbindungsblock verschraubt und gegenüber diesem abgedichtet. Der Sammelbehälter ist in seinem oberen Bereich zusätzlich durch eine Klammer mit dem Sammelrohr verbunden. Der Verbindungsblock ist somit ein Verbindungs- und Befestigungsteil zwischen Sammelrohr und Sammelbehälter. Die Kältemittelleitungen sind auf nicht dargestellte Weise mit den Sammelrohren über einen Eintrittsflansch und einen Austrittsflansch verbunden.

Es ist Aufgabe der vorliegenden Erfindung, den eingangs genannten Wärmeübertrager dahingehend zu verbessern, dass ein Anschlußflansch aus wenig Einzelteilen aufgebaut, einfach gegenüber dem Sammelrohr für den Lötprozess fixierbar und gegebenenfalls in einem Arbeitsgang mit dem Wärmeübertrager verlötbar ist.

Diese Aufgabe wird durch die Merkmale des Patentanspruches 1 gelöst. Erfindungsgemäß ist vorgesehen, dass der Anschlussflansch gegenüber dem Sammelrohr durch einen Stutzen formschlüssig fixiert ist, d. h. der Anschlussflansch bedarf keiner weiteren Teile zur Fixierung vor dem Lötprozess. Der gesamte Wärmeübertrager kann somit zusammen mit dem Anschlussflansch in einem Lötofen gelötet werden.

Erfindungsgemäß ist der Stutzen am Sammelrohr angeordnet und vorzugsweise aus dem Sammelrohr ausgeformt. Vorteilhaft ist es, wenn das Sammelrohr zweiteilig ausgebildet ist, d. h. aus Boden und einem Deckel besteht, aus welchem der Stutzen - ähnlich wie ein Durchzug - einfach ausgeformt werden kann. Im Kältemittelanschlussflansch ist eine entsprechende Aufnahmeöffnung, die auch an die Rundung des Deckels angepasst ist, vorgesehen - sie nimmt den Stutzen formschlüssig und auch kraftschlüssig auf, sodass eine Fixierung beider Teile gegeben ist.

In einer weiteren Ausgestaltung der Erfindung, ist in dem Anschlussflansch eine Sacklochbohrung vorgesehen, die z. B. einen Halter zur Befestigung von Zusatzteilen oder einen Lagerzapfen zur Abstützung des Wärmeübertragers aufnehmen kann.

Ausführungsbeispiele der Erfindung sind in der Zeichnung dargestellt und werden im Folgenden näher beschrieben. Es zeigen
- Fig. 1: einen Kondensator mit Kältemittelanschlussflansch,
- Fig. 2: ein Sammelrohr des Kondensators mit Kältemittelanschlussflansch,
- Fig. 3: das Sammelrohr des Kondensator ohne Kältemittelanschlussflansch,
- Fig. 4: einen Deckel des Sammelrohres,
- Fig. 5: eine weitere Ansicht des Sammelrohres mit Kältemittelanschlussflansch,
- Fig. 6: einen Schnitt entlang der Linie VI-VI in Fig. 5 durch den Kältemittelanschlussflansch,

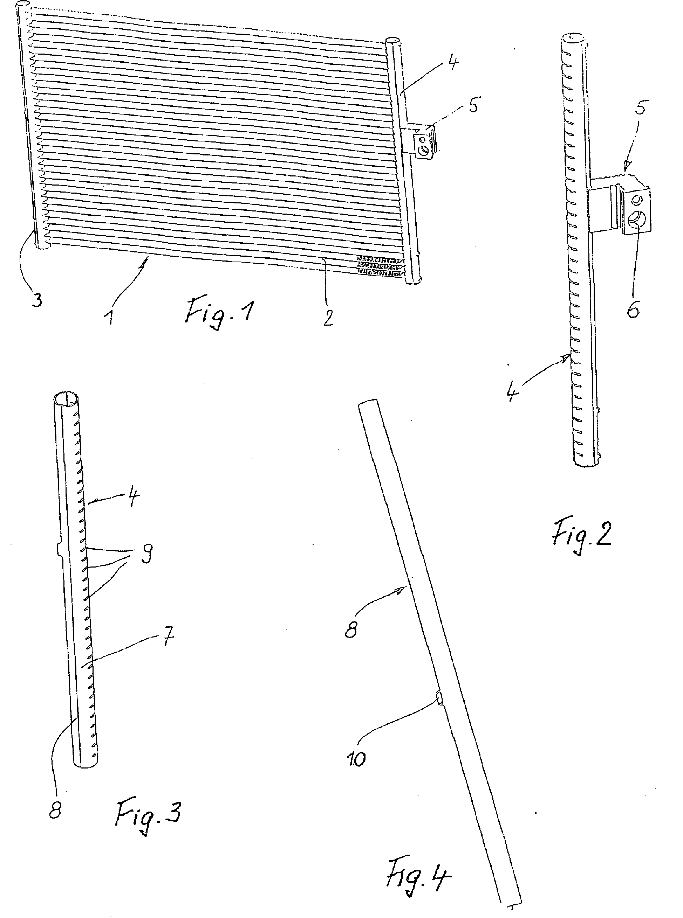

**Fig. 1** zeigt einen Kältemittelkondensator 1, welcher aus einem Rohr/Rippenblock 2 und seitlich angeordneten Sammelrohren 3, 4 besteht. Der Rohr/Rippenblock 2 ist aus nicht näher dargestellten Flachrohren und zwischen diesen angeordneten Wellrippen aufgebaut. Die Enden der Flachrohre sind in Durchzügen der Sammelrohre 3, 4 aufgenommen. Der gesamte Kondensator 1, bestehend aus Flachrohren, Wellrippen und Sammelrohren 3, 4 wird in einem Lötofen gelötet. An dem Sammelrohr 4 ist ein Kältemittelanschlussflansch 5 befestigt, an welchen eine nicht dargestellte Kältemittelleitung anschließbar ist. Ein weiterer Anschlussflansch für eine zweite Kältemittelleitung ist hier nicht dargestellt.

**Fig. 2** zeigt das Sammelrohr 4 mit den Kältemittelanschlussflansch 5 etwas vergrößert. Der Anschlussflansch 5 ist einerseits mit dem Sammelrohr 4 fest und dicht verbunden (verlötet) und weist eine Öffnung 6 für den Anschluss einer nicht dargestellten Kältemitteleintritts- bzw. -austrittsleitung auf.

**Fig. 3** zeigt das Sammelrohr 4, welches zweiteilig ausgebildet ist und aus einem schalenförmigen Boden 7 und einem schalenförmigen Deckel 8 besteht. Der Boden weist eine Reihe von Durchzügen 9 auf, in welchen die o. g. Rohre eingesetzt werden.

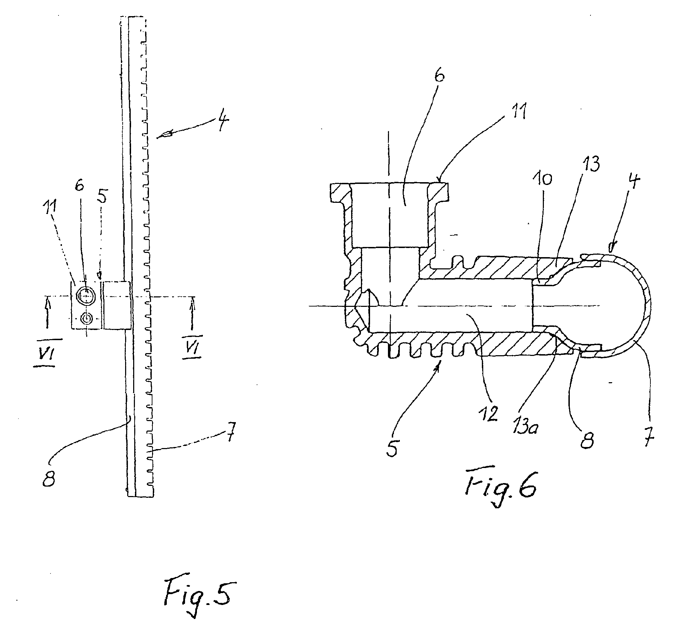

**Fig. 4** zeigt den Deckel 8 als Einzelteil, wobei dieser in einem mittleren Bereich einen Stutzen 10 aufweist. Mit diesem Stutzen 10 wird der Kältemittelanschlussflansch 5 gegenüber dem Deckel 8 fixiert, was im Folgenden erläutert wird.

**Fig. 5** zeigt eine weitere Ansicht des Sammelrohres 4, d. h. eine Seitenansicht. Der Kältemittelanschlussflansch 5 ist nur mit dem Deckel 8 verbunden und weist eine ebene Anschlussfläche 11 auf, in welcher die Kältemittelanschlussöffnung 6 angeordnet ist.

**Fig. 6** zeigt einen Schnitt durch das Sammelrohr 4 und den Kältemittelanschlussflansch 5 entlang der Schnittlinie VI-VI in Fig. 5. Der Kältemittelanschlussflansch 5 weist einen abgewinkelten Kältemittelkanal 12 auf, der einerseits mit dem Sammelrohr 4 und andererseits mit der Anschlussöffnung 6 kommuniziert. Aus dem Deckel 8 ist der Stutzen 10 ausgeformt, d. h. der Stutzen 10 ist einstückig mit dem Deckel 8 ausgebildet. Da der Deckel ein Einzelteil des Sammelrohres 4 bildet, kann der Stutzen 10 einfach durch Stanzprägen als Durchzug, vorzugsweise mit kreisförmigem Querschnitt hergestellt werden. Der Kältemittelanschlussflansch 5 weist ein sammelrohrseitiges Anschlussende 13 auf, welches einerseits der Kontur des Deckels 8 angepasst ist und andererseits eine Aufnahmebohrung 13a in Größe und Form des Stutzens 10 aufweist. Vorzugsweise sind der Innendurchmesser der Aufnahmebohrung 13a und der Aussendurchmesser der Stutzens 10 so aufeinander abgestimmt, dass sich ein leichter Klemmsitz ergibt. Der Kältemittelanschlussflansch 5 ist damit nach dem Aufsetzen auf den Stutzen 10 gegenüber dem Sammelrohr 4 fixiert und kann somit - ohne weitere Hilfs- oder Spannmittel - mit dem gesamten Kondensator 1 in einen Lötofen zum Löten verbracht werden. Nach dem Lötprozess sind das Ende 13 des Anschlussflansches 5 mit dem Stutzen 10 bzw. dem Deckel 8 dicht und fest verlötet. Der Anschlussstutzen 5 ist damit auch in der Lage, Kräfte, die sich aus der Befestigung einer nicht dargestellten Kältemittelleitung ergeben, aufzunehmen. Aus der vorstehenden Beschreibung wird deutlich, dass der Kältemittelanschlussflansch 5 und das Sammelrohr 4 ohne weitere Teile in Form von Verbindungsmitteln kältemitteldicht miteinander verbunden worden sind. Der Lötprozess erfolgt vorzugsweise nach dem so genannten Nocolok-Verfahren.

Die Erfindung wurde am Beispiel eines Kältemittelkondensators für eine Klimaanlage beschrieben. Es wird jedoch darauf hingewiesen, daß der erfindungsgemäße Wärmeübertrager auch für andere Anwendungszwecke geeignet ist.

## Patentansprüche

1. Wärmeübertrager (1), insbesondere Kondensator für Klimaanlagen, insbesondere von Kraftfahrzeugen, mit Rohren und mindestens einem mit den Rohren kommunizierenden Sammelrohr (4) und mit mindestens einem Anschlussflansch (5), der einerseits mit dem Sammelrohr (4) dicht verbunden ist sowie andererseits an eine Leitung anschließbar ist, wobei der Anschlussflansch (5) und das Sammelrohr (4) durch einen durchströmbaren Stutzen formschlüssig zueinander fixiert sind, der am Sammelrohr (4) angeordnet und in eine Aufnahmeöffnung (13a) im Anschlussflansch (5) aufgenommen ist, und wobei der Anschlussflansch (5) ein sammelrohrseitiges Anschlussende (13) aufweist, welches der Kontur des Sammelrohrs (4) angepasst ist, sowie einen mit dem Sammelrohr (4) kommunizierenden Kanal (12), **dadurch gekennzeichnet, dass** der Kanal (12) mit dem Stutzen (10) fluchtet.

2. Wärmeübertrager nach Anspruch 1, **dadurch gekennzeichnet, dass** der Stutzen (10) über die gerundete Kontur des Sammelrohrs (4) hinausragt.

3. Wärmeübertrager nach Anspruch 1 oder 2, **dadurch gekennzeichnet, dass** der Stutzen (10) aus dem Sammelrohr (4) ausgeformt ist.

4. Wärmeübertrager nach Anspruch 3, **dadurch gekennzeichnet, dass** das Sammelrohr (4) einen Deckel (8) und einen Boden (7) zur Aufnahme der Rohre aufweist und dass der Stutzen (10) aus dem Deckel (8) ausgeformt ist.

5. Wärmeübertrager nach einem der Ansprüche 1 bis 4, **dadurch gekennzeichnet, dass** das Sammelrohr (4) und der Anschlussflansch (5) im Bereich der Kontaktfläche zwischen Stutzen (10) und Aufnahmeöffnung (13a) verlötet sind.

6. Wärmeübertrager nach einem der Ansprüche 1-5, **dadurch gekennzeichnet, dass** der Kanal (12) abgewinkelt ist.

7. Wärmeübertrager nach einem der Ansprüche 1 bis 6, **dadurch gekennzeichnet, dass** der Stutzen (10) einen runden, insbesondere kreisrunden Querschnitt aufweist.

8. Wärmeübertrager nach Anspruch 7, **dadurch gekennzeichnet, dass** ein Innendurchmesser der Aufnahmeöffnung (13a) und ein Außendurchmesser des Stutzens (10) derart aufeinander abgestimmt sind, dass sich ein Klemmsitz ergibt.

## Claims

1. A heat exchanger (1), in particular a condenser for air-conditioning systems, in particular in motor vehicles, having tubes and at least one header (4) which communicates with said tubes and having at least one connecting flange (5) which, on one hand, is connected in a leak-proof manner to the header (4) and, on the other, can be connected to a line, the connecting flange (5) and the header (4) being joined in a positive fit by a passable connector which is positioned on the header (4) and received in a receiving opening (13a) in the connecting flange (5) and the connecting flange (5) having a connecting end (13) on the header side which is adapted to the contour of the header (4) and a channel (12) which communicates with the header (4),
**characterised in that**
the channel (12) is aligned with the connector (10).

2. A heat exchanger in accordance with claim 1,
**characterised in that**
the connector (10) projects beyond the rounded contour of the header (4).

3. A heat exchanger in accordance with claim 1 or 2,
**characterised in that**
the connector (10) is formed from the header (4).

4. A heat exchanger in accordance with claim 3,
**characterised in that**
the header (4) has a cover (8) and a base (7) for receiving the tubes, and the connector (10) is formed from the cover (8).

5. A heat exchanger in accordance with one of claims 1 to 4,
**characterised in that**
the header (4) and the connecting flange (5) are soldered in the area of the contact surface between the connector (10) and the receiving opening (13a).

6. A heat exchanger in accordance with one of claims 1 to 5,
**characterised in that**
the channel (12) is angled at 90°.

7. A heat exchanger in accordance with one of claims 1 to 6,
**characterised in that**
the connector (10) has a round, in particular circular cross-section.

8. A heat exchanger in accordance with claims 1 to 7,
**characterised in that**
an internal diameter of the receiving opening (13a) and an external diameter of the connector (10) are matched to one another in such a manner as to create a press fit.

## Revendications

1. Echangeur de chaleur (1), en particulier condenseur pour des installations de climatisation, en particulier de véhicules automobiles, comprenant des tuyaux et au moins un tuyau collecteur (4) communiquant avec les tuyaux et au moins une bride de raccordement (5), qui d'une part est relié de façon étanche au tuyau collecteur (4) et d'autre part peut être raccordé à une conduite, la bride de raccordement (5) et le tuyau collecteur (4) étant fixés l'un à l'autre par complémentarité de forme par une tubulure pouvant être traversée, laquelle est disposée sur le tuyau collecteur (4) et réceptionnée dans une ouverture de réception (13a) dans la bride de raccordement (5), et la bride de raccordement (5) présentant une extrémité de raccordement (13) côté tuyau collecteur, qui est adaptée au contour du tuyau collecteur (4), et un canal (12) communiquant avec le tuyau collecteur (4), **caractérisé en ce que** la bride de raccordement (5) présente un canal (12) qui est aligné avec la tubulure (10).

2. Echangeur de chaleur selon la revendication 1, **caractérisé en ce que** la tubulure (10) dépasse du contour arrondi du tuyau collecteur (4).

3. Echangeur de chaleur selon la revendication 1 ou 2, **caractérisé en ce que** la tubulure (10) est formée à partir du tuyau collecteur (4).

4. Echangeur de chaleur selon la revendication 3, **caractérisé en ce que** le tuyau collecteur (4) présente un couvercle (8) et un fond (7) pour le logement des tuyaux et **en ce que** la tubulure (10) est formée à partir du couvercle (8).

5. Echangeur de chaleur selon l'une quelconque des revendications 1 à 4, **caractérisé en ce que** le tuyau collecteur (4) et la bride de raccordement (5) sont soudés dans la zone de la surface de contact entre la tubulure (10) et l'ouverture de logement (13a).

6. Echangeur de chaleur selon l'une quelconque des revendications 1 à 5, **caractérisé en ce que** la bride de raccordement (5) présente une ouverture de raccordement (6) qui est disposée coudée par rapport au canal (12).

7. Echangeur de chaleur selon l'une quelconque des revendications 1 à 6, **caractérisé en ce que** la tubulure (10) présente une section ronde, en particulier circulaire.

8. Echangeur de chaleur selon la revendication 7, **caractérisé en ce qu'**un diamètre intérieur de l'ouverture de logement (13a) et un diamètre extérieur de la tubulure (10) sont assortis l'un à l'autre de telle sorte qu'on obtient un siège de serrage.
